# EUROPEAN PATENT SPECIFICATION

(11) **EP 3 619 452 B1**
(45) Date of publication and mention of the grant of the patent: **30.06.2021**
(21) Application number: 17726341.5
(22) Date of filing: 04.05.2017
(51) Int. Cl.: F16K 31/00, F01D 17/08, F02B 37/18, F02B 37/22, F02B 37/16

(54) **SUPERCHARGING SYSTEM FOR AN INTERNAL COMBUSTION PISTON ENGINE AND METHOD FOR OPERATING A WASTE GATE ARRANGEMENT**
TURBOLADERSYSTEM FÜR EINEN VERBRENNUNGSMOTOR UND VERFAHREN ZUM BETREIBEN EINER WASTEGATE-ANORDNUNG
SYSTÈME DE SURCHARGE POUR UN MOTEUR À PISTON À COMBUSTION INTERNE ET PROCÉDÉ DE FONCTIONNEMENT D'UN AGENCEMENT DE VANNE DE DÉCHARGE

(43) Date of publication of application: 11.03.2020
(73) Proprietor: Wärtsilä Finland Oy, 65100 Vaasa (FI)
(72) Inventor: MÄKI, Kristian, 65380 Vaasa (FI); HÄGGLUND, Olav, 65380 Vaasa (FI)
(74) Representative: Boco IP Oy Ab
(86) International application number: PCT/FI2017/050349
(87) International publication number: WO 2018/202938

(56) References cited:
- EP-A1- 2 014 894
- EP-A2- 2 146 071
- JP-A- S57 146 010
- JP-A- 2008 025 442
- US-A- 4 437 311

## Description

### Field of the invention

The invention relates to a supercharging system for an internal combustion piston engine, wherein the supercharging system comprising a turbocharger unit having a compressor part and a turbine part mechanically connected with each other, an exhaust gas system connecting the turbine part of the turbocharger unit with the engine, an inlet air system connecting the compressor part of the turbocharger unit with the engine, a waste gate arrangement having an upstream end in flow connection with the inlet air system downstream of the compressor part of the turbocharger unit, and a valve configured to regulate the flow of gas in the waste gate arrangement, wherein the valve comprises a movable valve member configured to restrict flow of gas through the valve and a flow control unit configured to move the movable valve member as defined in independent claim 1. Patent document US4437311 A discloses such a supercharging system for an internal combustion engine as defined in the preamble of independent claim 1. The invention relates also to a method of operating a waste gate arrangement in an internal combustion piston engine having a supercharging system comprising a turbocharger unit comprising a compressor part and a turbine part mechanically connected with each other, an exhaust gas system connecting the turbine part of the turbocharger unit with the engine, an inlet air system connecting the compressor part of the turbocharger unit with the engine, wherein the waste gate arrangement having an upstream end in flow connection with the inlet air system downstream of the compressor part of the turbocharger unit, and having a valve configured to regulate the flow of gas in the waste gate arrangement, wherein the valve comprises a movable valve member configured to restrict flow of gas through the valve and a flow control unit configured to move the movable valve member as defined in independent claim 10.

Cold air can cause problems in supercharging systems. The reason for this is that cold air is dense, which means that if cold air is fed into a supercharging system and is compressed by the compressor part of the turbocharger unit of the supercharging system, the pressure that is produced by the compressor part of the turbocharger unit on the downstream side of the compressor part of the turbocharger unit can exceed the pressure the compressor part of the turbocharger unit is able to produce. The result of this can be damages on the compressor part of the turbocharger unit.

### Objective of the invention

The object of the invention is to provide a solution to the problem. As electrical components are not reliable in cold conditions, a requirement is that the problem is solved without using electrical components.

### Short description of the invention

The supercharging system for an internal combustion piston engine is characterized by the definitions of independent claim 1.

Preferred embodiments of the supercharging system are defined in the dependent claims 2 to 9.

The method of operating a waste gate arrangement in an internal combustion piston engine is characterized by the definitions of independent claim 10.

Preferred embodiments of the method are defined in the dependent claims 11 to 16.

The invention is based on controlling the flow control unit of the valve of the waste gate arrangement mechanically in response to the temperature sensed by a thermally-responsive actuator. As the thermally-responsive actuator is mechanically connected to the flow control unit of the valve if the waste gate arrangement, no electrical devices are needed. The thermally-responsive actuator is configured to sense the temperature of at least one of ambient air surrounding a housing where the internal combustion piston engine having the supercharging system is arranged.

### List of figures

In the following the invention will described in more detail by referring to the figures, which
Figure 1 shows a flow diagram of an example, not belonging to the invention.
Figure 2 shows a flow diagram of an embodiment,
Figure 3 shows a flow diagram of an example, not belonging to the invention.
Figure 4 shows a flow diagram of an embodiment,
Figure 5 shows a flow diagram of an example, not belonging to the invention.
Figure 6 shows a flow diagram of an embodiment,
Figure 7 shows a flow diagram of an example, not belonging to the invention.
Figure 8 shows a flow diagram of an embodiment,
Figure 9 shows a flow diagram of a an example, not belonging to the invention.
Figure 10 shows a flow diagram of an embodiment,
Figure 11 shows a flow diagram of an embodiment, and
Figure 12 shows a thermally-responsive actuator that can be used in the system and in the method.

### Detailed description of the invention

The supercharging system comprises a turbocharger unit 2 having a compressor part 3 and a turbine part 4 mechanically connected with each other.

The supercharging system comprises an exhaust gas system 5 connecting the turbine part 4 of the turbocharger unit 2 with the engine 1.

The supercharging system comprises an inlet air system 6 connecting the compressor part 3 of the turbocharger unit 2 with the engine 1.

The supercharging system comprises a waste gate arrangement 7 having an upstream end 8 in flow connection with the inlet air system 6 downstream of the compressor part 3 of the turbocharger unit 2.

The supercharging system comprises a valve 9 configured to regulate the flow of gas in the waste gate arrangement 7.

The valve 9 comprises a movable valve member 10 configured to restrict flow of gas through the valve 9 and a flow control unit 11 configured to move the movable valve member.

The flow control unit 11 of the valve 9 of the waste gate arrangement 7 is mechanically connected to a thermally-responsive actuator 12 so that the thermally-responsive actuator 12 is configured to control the flow control unit 11 of the valve 9 in response to temperatures sensed by the thermally-responsive actuator 12.

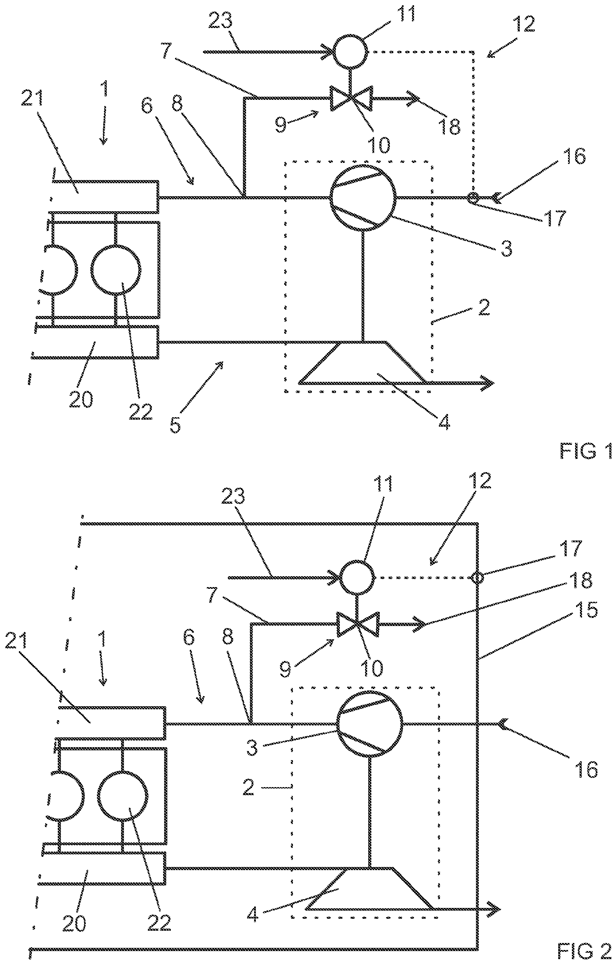

Figures 1 to 11 shows for clarity reasons additionally an exhaust manifold 20 of the internal combustion piston engine 1, an inlet manifold 21 of the internal combustion piston engine 1, and cylinders 22 of the internal combustion piston engine 1. The function of an internal combustion engine is known in the art.

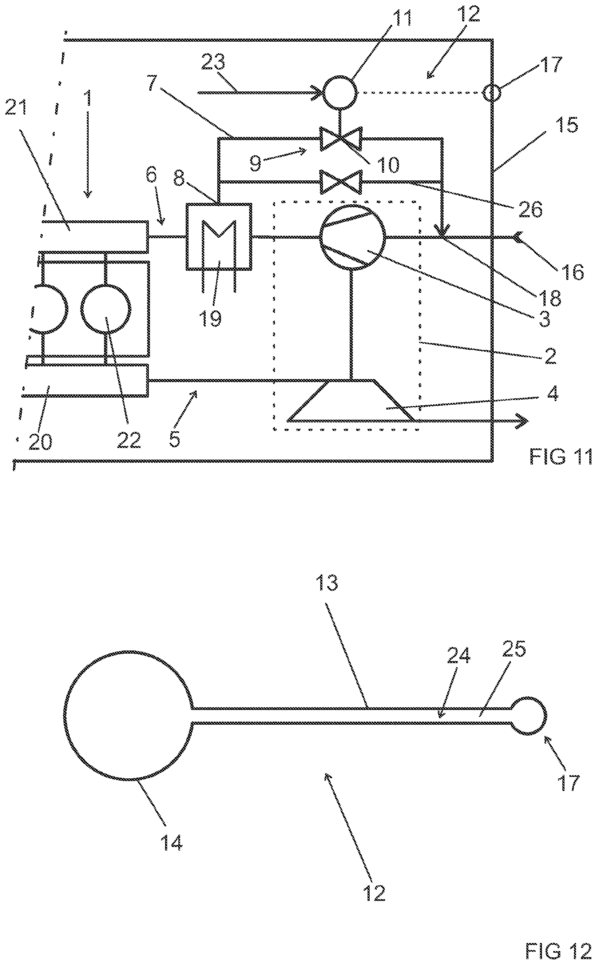

The thermally-responsive actuator 12 can comprise a hollow tube member 13, such as a hollow rigid housing or a capillary, having a cavity 24 filled with a thermally expansive substance 25 that is configured to expand and contract in response to changes in temperature of the thermally expansive substance 25, wherein the thermally expansive substance 25 being configured to act upon an actuator unit 14 such as a piston member that is in contact with the thermally expansive substance 25 and that is in contact with the flow control unit 11 of the valve 9. Figure 12 show a thermally-responsive actuator 12 of this type. The thermally-responsive actuator 12 can comprise a spring means (not shown in the figures) that is configured to be loaded with spring energy as the thermally expansive substance 25 expands and acts upon the actuator unit 14, whereby the spring energy loaded to the spring means is configured to act upon the actuator unit 14 as the thermally expansive substance 25 contracts. In such way, the spring means can be used to bring the actuator unit 14 for example to a retracted position as the thermally expansive substance 25 contracts.

Alternatively, the thermally-responsive actuator 12 can comprise at least one bimetallic member having an outer form that is configured to vary in response to changes in temperature of said at least one bimetallic member, wherein said at least one bimetallic member being configured to act upon an actuator unit 14 such as a piston member that is in contact with said at least one bimetallic member and that is in contact with the flow control unit 11 of the valve 9.

The thermally-responsive actuator 12 is preferably, but not necessarily, thermally insulated except for an end 17 of the thermally-responsive actuator 12.

The supercharging system can, as shown in figures 2, 4, 6, 8, 10 and 11, be provided at an internal combustion piston engine 1 arranged in a housing 15, and by an upstream end 16 of the inlet air system 6 can be in flow connection with ambient air surrounding the housing 15.

If the supercharging system is provided at an internal combustion piston engine 1 arranged in a housing 15, and having an upstream end 16 of the inlet air system 6 in flow connection with ambient air surrounding the housing 15, the thermally-responsive actuator 12 can be exposed or have and end 17 exposed to the ambient air surrounding the housing 15.

The thermally-responsive actuator 12 can be exposed to or the thermally-responsive actuator 12 can have an end 17 exposed to gas flowing in the inlet air system 6 upstream of the compressor part 3 of the turbocharger unit 2, in an example not belonging to the invention.

If the supercharging system is provided at an internal combustion piston engine 1 arranged in a housing 15, and having an upstream end 16 of the inlet air system 6 in flow connection with ambient air surrounding the housing 15, the thermally-responsive actuator 12 can be exposed or the thermally-responsive actuator 12 can have an end 17 exposed to gas flowing in the inlet air system 6 upstream of the compressor part 3 of the turbocharger unit 2.

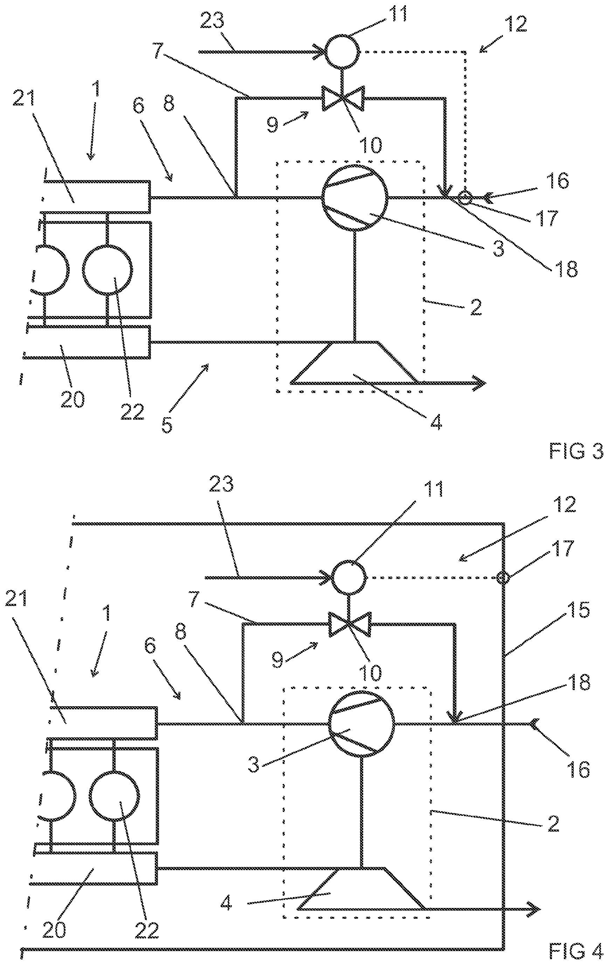

The waste gate arrangement 7 can, as shown in figures 3 to 11, have a downstream end 18 in flow connection with the inlet air system 6 upstream of the compressor part 3 of the turbocharger unit 2. An advantage of this is that thermal energy of the gas i.e. the inlet air from the waste gate arrangement 7 heats fresh inlet air coming from the upstream end 16 if the inlet air system 6 prior the compressor part 3 of the turbocharger unit 2. As a result of this, the air fed to the compressor part 3 of the turbocharger unit 2 will be less dense. Alternatively, as shown in figures 1 and 2, the waste gate arrangement 7 can have a downstream end 18 configured to discharge gas from the waste gate arrangement 7 on the outside of the inlet air system 6.

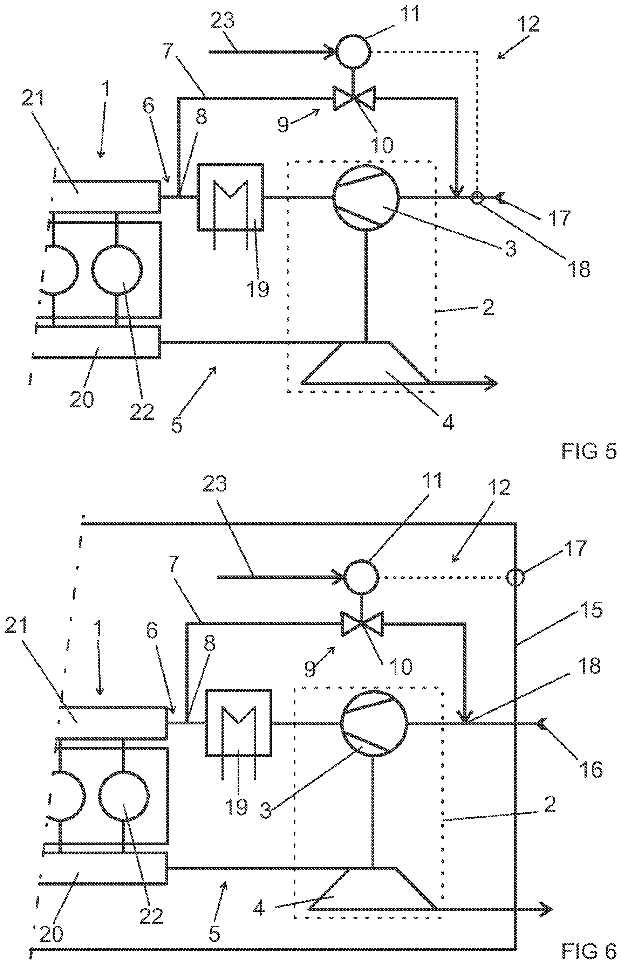

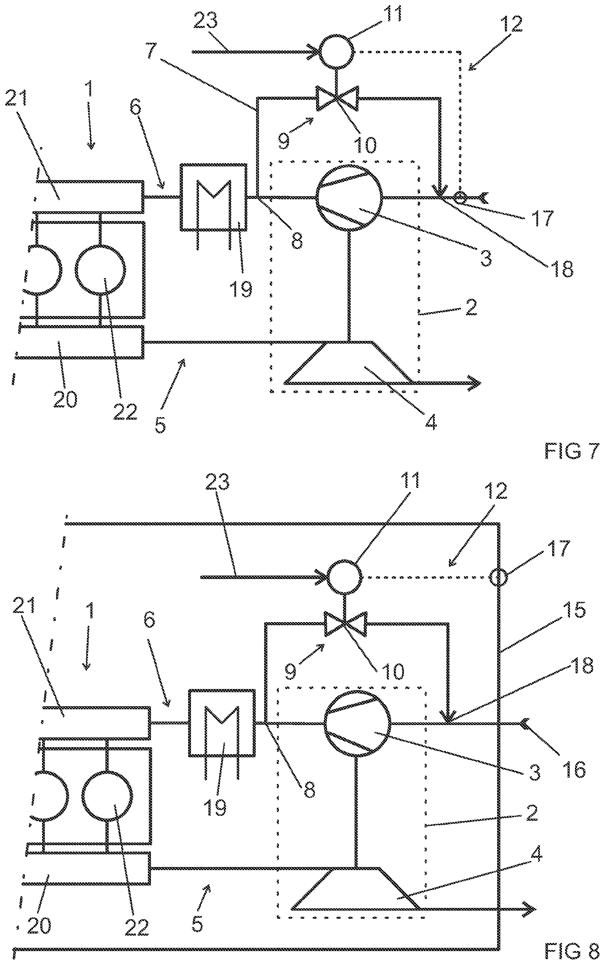

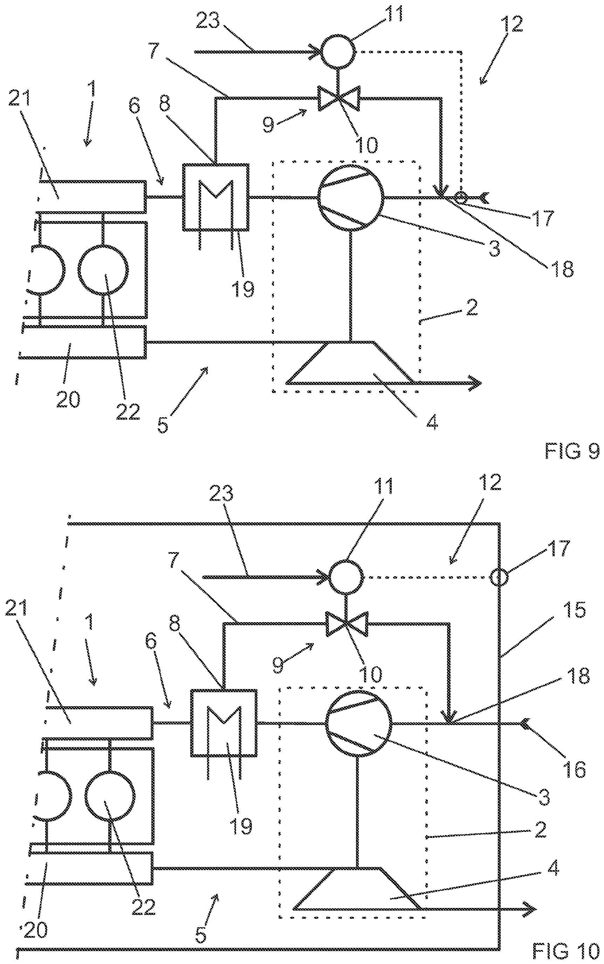

The inlet air system 6 can, as shown in figures 5 to 11, comprise a charger air cooler 19 downstream of the compressor part 3 of the turbocharger unit 2. The upstream end 8 of the waste gate arrangement 7 can, as shown in figures 9 to 11, be in flow connection with the inlet air system 6 via the charger air cooler. The upstream end 8 of the waste gate arrangement 7 can, as shown in figures 7 and 8, be in flow connection with the inlet air system 6 upstream of the charger air cooler. The upstream end 8 of the waste gate arrangement 7 can, as shown in figures 5 and 6, be in flow connection with the inlet air system 6 downstream of the charger air cooler.

The flow control unit 11 of the valve 9 can be pneumatically assisted or driven and be fed by air from a pneumatic system 23. In such case, the thermally-responsive actuator 12 such as an actuator unit 14 of the thermally-responsive actuator 12, can be configured to control the flow control unit 11 of the valve 9 by controlling the feeding of air from the pneumatic system 23 to the flow control unit 11 of the valve 9.

The flow control unit 11 of the valve 9 can be configured to move the movable valve member 10 selectively to a fully open position or to a fully closed position. Alternatively, the flow control unit 11 of the valve 9 can be configured to move the movable valve member 10 between a fully open position and a fully closed position and to positions between said fully open position and said fully closed position.

The supercharging system is preferably, but not necessarily, provided with a manual by-pass arrangement 26 with a manual valve. With a such manual by-pass arrangement, pressure can manually be released from the downstream side of the compressor part 3 of the turbocharging unit of the supercharging system.

Next the method of operating a waste gate arrangement 7 in an internal combustion piston engine 1 and some embodiments will be described in greater detail.

The internal combustion piston engine 1 has a supercharging system comprising a turbocharger unit 2 having a compressor part 3 and a turbine part 4 mechanically connected with each other, an exhaust gas system 5 connecting the turbine part 4 of the turbocharger unit 2 with the engine 1, an inlet air system 6 connecting the compressor part 3 of the turbocharger unit 2 with the engine 1, wherein the waste gate arrangement 7 having an upstream end 8 in flow connection with the inlet air system 6 downstream of the compressor part 3 of the turbocharger unit 2, and having a valve 9 configured to regulate the flow of gas in the waste gate arrangement 7, wherein the valve 9 comprises a movable valve member 10 configured to restrict flow of gas through the valve 9 and a flow control unit 11 configured to move the movable valve member.

The method comprises providing a thermally-responsive actuator 12, mechanically connecting the flow control unit 11 of the valve 9 of the waste gate arrangement 7 to the thermally-responsive actuator 12, and controlling the flow control unit 11 of the valve 9 in response to temperatures sensed by the thermally-responsive actuator 12.

The supercharging system is provided at an internal combustion piston engine 1 arranged in a housing 15 so that an upstream end 16 of the inlet air system 6 being in flow connection with ambient air surrounding the housing 15. The method comprises arranging the thermally-responsive actuator 12 or arranging an end of the thermally-responsive actuator 12 exposed to the ambient air surrounding the housing 15.

The method can comprise in an example not belonging to the invention, arranging the thermally-responsive actuator 12 exposed or arranging an end of the thermally-responsive actuator 12 to gas flowing in the inlet air system 6 upstream of the compressor part 3 of the turbocharger unit 2.

The method can comprise providing a thermally-responsive actuator 12 comprising a hollow tube member 13, such as a hollow rigid housing or a capillary, having a cavity 24 filled with a thermally expansive substance 25 that is configured to expand and contract in response to changes in temperature of the thermally expansive substance 25, wherein the thermally expansive substance 25 being configured to act upon an actuator unit 14 such as a piston member that is in contact with the thermally expansive substance 25, mechanically connecting the actuator unit 14 with the flow control unit of the valve 9, and controlling the flow control unit 11 of the valve 9 with the actuator unit 14 of the thermally-responsive actuator 12. The thermally-responsive actuator 12 can comprise a spring means (not shown in the figures) that is configured to be loaded with spring energy as the thermally expansive substance 25 expands and acts upon the actuator unit 14, whereby the spring energy loaded to the spring means is configured to act upon the actuator unit 14 as the thermally expansive substance 25 contracts. In such way, the spring means can be used to bring the actuator unit 14 for example to a retracted position as the thermally expansive substance 25 contracts.

The method can comprise providing a thermally-responsive actuator 12 comprising at least one bimetallic member having an outer form that is configured to vary in response to changes in temperature of said at least one bimetallic member, wherein said at least one bimetallic member being configured to act upon an actuator unit 14 such as a piston member that is in contact with said at least one bimetallic member, mechanically connecting the actuator unit 14 with the flow control unit of the valve 9, and controlling the flow control unit 11 of the valve 9 with the actuator unit 14 of thermally-responsive actuator 12.

In some embodiments of the method, the supercharging system is provided at an internal combustion piston engine 1 arranged in a housing 15 so that an upstream end 16 of the inlet air system 6 being in flow connection with ambient air surrounding the housing 15. In such cases, the method can comprise arranging the thermally-responsive actuator 12 or an end 17 of the thermally-responsive actuator 12 exposed to the ambient air surrounding the housing 15. The method can comprise arranging the thermally-responsive actuator 12 or arranging an end 17 of the thermally-responsive actuator 12 exposed to gas flowing in the inlet air system 6 upstream of the compressor part 3 of the turbocharger unit 2. The method comprises preferably, but not necessarily, thermally insulating the thermally-responsive actuator 12 except for said end.

The method comprises preferably, but not necessarily, as shown in figures 3 to 11, connecting a downstream end 18 of the waste gate arrangement 7 in flow connection with the inlet air system 6 upstream of the compressor part 3 of the turbocharger unit 2, and feeding air from the waste gate arrangement 7 into the inlet air system 6 upstream of the compressor part 3 of the turbocharger unit 2. An advantage of this is that thermal energy of the gas i.e. the inlet air from the waste gate arrangement 7 heats fresh inlet air coming from the upstream end 16 if the inlet air system 6 prior the compressor part 3 of the turbocharger unit 2. As a result of this, the air fed to the compressor part 3 of the turbocharger unit 2 will be less dense. Alternatively, the method can, as shown in figures 1 and 2, comprise discharging air from the waste gate arrangement 7 to the outside of the inlet air system 6.

The can comprise moving the movable valve member 10 with the flow control unit 11 of the valve 9 selectively to a fully open position or to a fully closed position in response to the temperatures sensed by the thermally-responsive actuator 12.

The method can comprise moving the movable valve member 10 with the flow control unit 11 of the valve 9 between a fully open position and a fully closed position and to positions between said fully open position and said fully closed position in response to the temperatures sensed by the thermally-responsive actuator 12.

## Claims

1. A supercharging system for an internal combustion piston engine (1), wherein the supercharging system comprising
a turbocharger unit (2) having a compressor part (3) and a turbine part (4) mechanically connected with each other,
an exhaust gas system (5) connecting the turbine part (4) of the turbocharger unit (2) with the engine (1),
an inlet air system (6) connecting the compressor part (3) of the turbocharger unit (2) with the engine (1),
a waste gate arrangement (7) having an upstream end (8) in flow connection with the inlet air system (6) downstream of the compressor part (3) of the turbocharger unit (2), and
a valve (9) configured to regulate the flow of gas in the waste gate arrangement (7), wherein the valve (9) comprises a movable valve member (10) configured to restrict flow of gas through the valve (9) and a flow control unit (11) configured to move the movable valve member,
the flow control unit (11) of the valve (9) of the waste gate arrangement (7) being mechanically connected to a thermally-responsive actuator (12) so that the thermally-responsive actuator (12) being configured to control the flow control unit (11) of the valve (9) in response to temperatures sensed by the thermally-responsive actuator (12),
**characterized**
**by** the supercharging system being provided at an internal combustion piston engine (1) arranged in a housing (15),
by an upstream end (16) of the inlet air system (6) being in flow connection with ambient air surrounding the housing (15), and
by the thermally-responsive actuator (12) having an end (17) exposed to the ambient air surrounding the housing (15).

2. The supercharging system according to claim 1, **characterized**
**by** the thermally-responsive actuator (12) having an end exposed to gas flowing in the inlet air system (6) upstream of the compressor part (3) of the turbocharger unit (2).

3. The supercharging system according to claim 1 or 2, **characterized**
**by** the thermally-responsive actuator (12) being thermally insulated except for said end.

4. The supercharging system according to any of the claims 1 to 3, **characterized**
**by** the waste gate arrangement (7) having a downstream end (18) in flow connection with the inlet air system (6) upstream of the compressor part (3) of the turbocharger unit (2).

5. The supercharging system according to any of the claims 1 to 3, **characterized**
**by** the waste gate arrangement (7) having a downstream end (18) configured to discharge gas from the waste gate arrangement (7) on the outside of the inlet air system (6).

6. The supercharging system according to any of the claims 1 to 5, **characterized**
**by** the inlet air system (6) comprising a charger air cooler (19) downstream of the compressor part (3) of the turbocharger unit (2).

7. The supercharging system according to any of the claims 1 to 6, **characterized**
**by** flow control unit (11) of the valve (9) being pneumatically assisted.

8. The supercharging system according to any of the claims 1 to 7, **characterized**
**by** the flow control unit (11) of the valve (9) being configured to move the movable valve member (10) selectively to a fully open position or to a fully closed position.

9. The supercharging system according to any of the claims 1 to 7, **characterized**
**by** the flow control unit (11) of the valve (9) being configured to move the movable valve member (10) between a fully open position and a fully closed position and to positions between said fully open position and said fully closed position.

10. A method of operating a waste gate arrangement (7) in an internal combustion piston engine (1) having a supercharging system comprising a turbocharger unit (2) comprising a compressor part (3) and a turbine part (4) mechanically connected with each other, an exhaust gas system (5) connecting the turbine part (4) of the turbocharger unit (2) with the engine (1), an inlet air system (6) connecting the compressor part (3) of the turbocharger unit (2) with the engine (1), wherein the waste gate arrangement (7) having an upstream end (8) in flow connection with the inlet air system (6) downstream of the compressor part (3) of the turbocharger unit (2), and having a valve (9) configured to regulate the flow of gas in the waste gate arrangement (7), wherein the valve (9) comprises a movable valve member (10) configured to restrict flow of gas through the valve (9) and a flow control unit (11) configured to move the movable valve member,
wherein the method comprising
providing a thermally-responsive actuator (12),
mechanically connecting the flow control unit (11) of the valve (9) of the waste gate arrangement (7) to the thermally-responsive actuator (12), and
controlling the flow control unit (11) of the valve (9) in response to temperatures sensed by the thermally-responsive actuator (12),
**characterized**
**by** the supercharging system being provided at an internal combustion piston engine (1) arranged in a housing (15) so that an upstream end (16) of the inlet air system (6) being in flow connection with ambient air surrounding the housing (15), and
by arranging an end (17) of the thermally-responsive actuator (12) exposed to the ambient air surrounding the housing (15).

11. The method according to claim 10, **characterized**
**by** arranging an end (17) of the thermally-responsive actuator (12) exposed to gas flowing in the inlet air system (6) upstream of the compressor part (3) of the turbocharger unit (2).

12. The method according to claim 10 or 11, **characterized**
**by** thermally insulating the thermally-responsive actuator (12) except for said end (17).

13. The method according to any of the claims 10 to 12, **characterized**
**by** connecting a downstream end (18) of the waste gate arrangement (7) in flow connection with the inlet air system (6) upstream of the compressor part (3) of the turbocharger unit (2), and
by feeding air from the waste gate arrangement (7) into the inlet air system (6) upstream of the compressor part (3) of the turbocharger unit (2).

14. The method according to any of the claims 10 to 13, **characterized**
**by** discharging air from the waste gate arrangement (7) to the outside of the inlet air system (6).

15. The method according to any of the claims 10 to 14, **characterized**
**by** moving the movable valve member (10) with the flow control unit (11) of the valve (9) selectively to a fully open position or to a fully closed position in response to the temperatures sensed by the thermally-responsive actuator (12).

16. The method according to any of the claims 10 to 14, **characterized**
**by** moving the movable valve member (10) with the flow control unit (11) of the valve (9) between a fully open position and a fully closed position and to positions between said fully open position and said fully closed position in response to the temperatures sensed by the thermally-responsive actuator (12).

## Patentansprüche

1. Ladedrucksystem für eine Kolbenbrennkraftmaschine (1), wobei das Ladedrucksystem umfasst:
eine Turbolader-Einheit (2) mit einem Verdichterteil (3) und einem Turbinenteil (4), die mechanisch miteinander verbunden sind,
ein Abgassystem (5), das den Turbinenteil (4) der Turbolader-Einheit (2) mit der Brennkraftmaschine (1) verbindet,
ein Einlassluftsystem (6), das den Verdichterteil (3) der Turbolader-Einheit (2) mit der Brennkraftmaschine (1) verbindet,
eine Wastegate-Anordnung (7) mit einem anströmseitigen Ende (8) in fluidtechnischer Verbindung mit dem Einlassluftsystem (6) auf der Abströmseite des Verdichterteils (3) der Turbolader-Einheit (2), und
ein Ventil (9), das zur Regulierung des Gasstroms in der Wastegate-Anordnung (7) ausgelegt ist, wobei das Ventil (9) ein bewegliches Ventilglied (10), das zum Einschränken des durch das Ventil (9) gehenden Gasstroms ausgelegt ist, und eine Durchflussregeleinheit (11), die zum Bewegen des beweglichen Ventilglieds ausgelegt ist, umfasst,
wobei die Durchflussregeleinheit (11) des Ventils (9) der Wastegate-Anordnung (7) mit einem thermisch ansprechenden Aktor (12) mechanisch verbunden ist, so dass der thermisch ansprechende Aktor (12) dazu ausgelegt ist, die Durchflussregeleinheit (11) des Ventils (9) in Reaktion auf vom thermisch ansprechenden Aktor (12) gefühlte Temperaturen anzusteuern,
**gekennzeichnet**
**dadurch, dass** das Ladedrucksystem an einer in einem Gehäuse (15) angeordneten Kolbenbrennkraftmaschine (1) vorgesehen ist,
dadurch, dass ein anströmseitiges Ende (16) des Einlassluftsystems (6) mit der das Gehäuse (15) umgebenden Umgebungsluft fluidtechnisch verbunden ist, und
dadurch, dass der thermisch ansprechende Aktor (12) ein Ende (17) aufweist, das der das Gehäuse (15) umgebenden Umgebungsluft ausgesetzt ist.

2. Ladedrucksystem nach Anspruch 1, **gekennzeichnet**
**dadurch, dass** der thermisch ansprechende Aktor (12) ein Ende aufweist, das einem im Einlassluftsystem (6) auf der Anströmseite des Verdichterteils (3) der Turbolader-Einheit (2) strömenden Gas ausgesetzt ist.

3. Ladedrucksystem nach Anspruch 1 oder 2, **gekennzeichnet**
**dadurch, dass** der thermisch ansprechende Aktor (12) thermisch isoliert ist, außer am genannten Ende.

4. Ladedrucksystem nach einem der Ansprüche 1 bis 3, **gekennzeichnet**
**dadurch, dass** die Wastegate-Anordnung (7) ein abströmseitiges Ende (18) in fluidtechnischer Verbindung mit dem Einlassluftsystem (6) auf der Anströmseite des Verdichterteils (3) der Turbolader-Einheit (2) aufweist.

5. Ladedrucksystem nach einem der Ansprüche 1 bis 3, **gekennzeichnet**
**dadurch, dass** die Wastegate-Anordnung (7) ein abströmseitiges Ende (18) aufweist, das dazu ausgelegt ist, Gas aus der Wastegate-Anordnung (7) an der Außenseite des Einlassluftsystems (6) auszutragen.

6. Ladedrucksystem nach einem der Ansprüche 1 bis 5, **gekennzeichnet**
**dadurch, dass** das Einlassluftsystem (6) einen Ladeluftkühler (19) auf der Abströmseite des Verdichterteils (3) der Turbolader-Einheit (2) aufweist.

7. Ladedrucksystem nach einem der Ansprüche 1 bis 6, **gekennzeichnet**
**dadurch, dass** die Durchflussregeleinheit (11) des Ventils (9) pneumatisch unterstützt ist.

8. Ladedrucksystem nach einem der Ansprüche 1 bis 7, **gekennzeichnet**
**dadurch, dass** die Durchflussregeleinheit (11) des Ventils (9) dazu ausgelegt ist, das bewegliche Ventilglied (10) selektiv zu einer vollständig offenen Stellung oder zu einer vollständig geschlossenen Stellung zu bewegen.

9. Ladedrucksystem nach einem der Ansprüche 1 bis 7, **gekennzeichnet**
**dadurch, dass** die Durchflussregeleinheit (11) des Ventils (9) dazu ausgelegt ist, das bewegliche Ventilglied (10) zwischen einer vollständig offenen Stellung und einer vollständig geschlossenen Stellung und zu Stellungen zwischen der vollständig offenen Stellung und der vollständig geschlossenen Stellung zu bewegen.

10. Verfahren zum Betreiben einer Wastegate-Anordnung (7) in einer Kolbenbrennkraftmaschine (1) aufweisend ein Ladedrucksystem umfassend eine Turbolader-Einheit (2), die einen Verdichterteil (3) und einen Turbinenteil (4) umfasst, die mechanisch miteinander verbunden sind, ein Abgassystem (5), das den Turbinenteil (4) der Turbolader-Einheit (2) mit der Brennkraftmaschine (1) verbindet, ein Einlassluftsystem (6), das den Verdichterteil (3) der Turbolader-Einheit (2) mit der Brennkraftmaschine (1) verbindet, wobei die Wastegate-Anordnung (7) ein anströmseitiges Ende (8) in fluidtechnischer Verbindung mit dem Einlassluftsystem (6) auf der Abströmseite des Verdichterteils (3) der Turbolader-Einheit (2) aufweist und ein zur Regulierung des Gasstroms in der Wastegate-Anordnung (7) ausgelegtes Ventil (9) aufweist, wobei das Ventil (9) ein bewegliches Ventilglied (10), das zum Einschränken des durch das Ventil (9) gehenden Gasstroms ausgelegt ist, und eine Durchflussregeleinheit (11), die zum Bewegen des beweglichen Ventilglieds ausgelegt ist, umfasst, wobei das Verfahren umfasst:
Bereitstellen eines thermisch ansprechendes Aktors (12),
mechanisches Verbinden der Durchflussregeleinheit (11) des Ventils (9) der Wastegate-Anordnung (7) mit dem thermisch ansprechenden Aktor (12),
Ansteuern der Durchflussregeleinheit (11) des Ventils (9) in Reaktion auf vom thermisch ansprechenden Aktor (12) gefühlte Temperaturen,
**gekennzeichnet**
**dadurch, dass** das Ladedrucksystem an einer in einem Gehäuse (15) angeordneten Kolbenbrennkraftmaschine (1) vorgesehen wird, so dass ein anströmseitiges Ende (16) des Einlassluftsystems (6) sich in fluidtechnischer Verbindung mit der das Gehäuse (15) umgebenden Umgebungsluft befindet, und
dadurch, dass ein Ende (17) des thermisch ansprechenden Aktors (12) so angeordnet wird, dass es der das Gehäuse (15) umgebenden Umgebungsluft ausgesetzt ist.

11. Verfahren nach Anspruch 10, **gekennzeichnet**
**dadurch, dass** ein Ende (17) des thermisch ansprechenden Aktors (12) so angeordnet wird, dass es einem Gasstrom im Einlassluftsystem (6) auf der Anströmseite des Verdichterteils (3) der Turbolader-Einheit (2) ausgesetzt ist.

12. Verfahren nach Anspruch 10 oder 11, **gekennzeichnet**
**dadurch, dass** der thermisch ansprechende Aktor (12) thermisch isoliert wird, außer am genannten Ende (17).

13. Verfahren nach einem der Ansprüche 10 bis 12, **gekennzeichnet**
**dadurch, dass** ein abströmseitiges Ende (18) der Wastegate-Anordnung (7) in fluidtechnischer Verbindung mit dem Einlassluftsystem (6) auf der Anströmseite des Verdichterteils (3) der Turbolader-Einheit (2) eingebunden wird, und
dadurch, dass Luft aus der Wastegate-Anordnung (7) in das Einlassluftsystem (6) auf der Anströmseite des Verdichterteils (3) der Turbolader-Einheit (2) eingetragen wird.

14. Verfahren nach einem der Ansprüche 10 bis 13, **gekennzeichnet**
**dadurch, dass** Luft aus der Wastegate-Anordnung (7) zur Außenseite des Einlassluftsystems (6) ausgetragen wird.

15. Verfahren nach einem der Ansprüche 10 bis 14, **gekennzeichnet**
**dadurch, dass** das bewegliche Ventilglied (10) mit der Durchflussregeleinheit (11) des Ventils (9) in Reaktion auf die vom thermisch ansprechenden Aktor (12) gefühlten Temperaturen selektiv zu einer vollständig offenen Stellung oder zu einer vollständig geschlossenen Stellung bewegt wird.

16. Verfahren nach einem der Ansprüche 10 bis 14, **gekennzeichnet**
**dadurch, dass** das bewegliche Ventilglied (10) mit der Durchflussregeleinheit (11) des Ventils (9) in Reaktion auf die vom thermisch ansprechenden Aktor (12) gefühlten Temperaturen zwischen einer vollständig offenen Stellung und einer vollständig geschlossenen Stellung und zu Stellungen zwischen der vollständig offenen Stellung und der vollständig geschlossen Stellung bewegt wird.

## Revendications

1. Système de suralimentation pour un moteur à combustion interne à pistons (1), ledit système de suralimentation comprenant :
une unité de turbocompresseur (2) comportant une partie compresseur (3) et une partie turbine (4) mécaniquement reliées entre elles,
un système de gaz d'échappement (5) reliant la partie turbine (4) de l'unité de turbocompresseur (2) au moteur (1),
un système d'air d'admission (6) reliant la partie compresseur (3) de l'unité de turbocompresseur (2) au moteur (1),
un agencement de wastegate (7) comportant une extrémité amont (8) en communication fluidique avec le système d'air d'admission (6) en aval de la partie compresseur (3) de l'unité de turbocompresseur (2), et
une soupape (9) configurée pour réguler le débit de gaz dans l'agencement de wastegate (7), ladite soupape (9) comprenant un élément de soupape mobile (10) configuré pour limiter un débit de gaz à travers la soupape (9) et une unité de contrôle de débit (11) configuré pour déplacer l'élément de soupape mobile,
ladite unité de contrôle de débit (11) de la soupape (9) de l'agencement de wastegate (7) étant mécaniquement reliée à un actionneur à réponse thermique (12) de telle façon que l'actionneur à réponse thermique (12) soit configuré pour actionner l'unité de contrôle de débit (11) de la soupape (9) en réponse à des températures détectées par l'actionneur à réponse thermique (12),
**caractérisé**
**en ce que** le système de suralimentation est prévu sur un moteur à combustion interne à pistons (1) disposé dans un boîtier (15),
**en ce qu'**une extrémité amont (16) du système d'air d'admission (6) est en communication fluidique avec l'air ambiant environnant le boîtier (15), et
**en ce que** l'actionneur à réponse thermique (12) comporte une extrémité (17) exposée à l'air ambiant environnant le boîtier (15).

2. Système de suralimentation selon la revendication 1, **caractérisé en ce que**
l'actionneur à réponse thermique (12) comporte une extrémité (12) exposée à un gaz coulant dans le système d'air d'admission (6) en amont de la partie compresseur (3) de l'unité de turbocompresseur (2).

3. Système de suralimentation selon la revendication 1 ou 2, **caractérisé**
**en ce que** l'actionneur à réponse thermique (12) est isolé thermiquement, à l'exception de ladite extrémité.

4. Système de suralimentation selon l'une des revendications 1 à 3, **caractérisé**
**en ce que** l'agencement de wastegate (7) comporte une extrémité aval (18) en communication fluidique avec le système d'air d'admission (6) en amont de la partie compresseur (3) de l'unité de turbocompresseur (2).

5. Système de suralimentation selon l'une des revendications 1 à 3, **caractérisé**
**en ce que** l'agencement de wastegate (7) comporte une extrémité aval (18) configurée pour évacuer le gaz venant de l'agencement de wastegate (7) à l'extérieur du système d'air d'admission (6).

6. Système de suralimentation selon l'une des revendications 1 à 5, **caractérisé**
**en ce que** le système d'air d'admission (6) comporte un refroidisseur d'air de suralimentation (19) en aval de la partie compresseur (3) de l'unité de turbocompresseur (2).

7. Système de suralimentation selon l'une des revendications 1 à 6, **caractérisé**
**en ce que** l'unité de contrôle de débit (11) de la soupape (9) est à assistance pneumatique.

8. Système de suralimentation selon l'une des revendications 1 à 7, **caractérisé**
**en ce que** l'unité de contrôle de débit (11) de la soupape (9) est configurée pour déplacer l'élément de soupape mobile (10) sélectivement vers une position complètement ouverte ou vers une position complètement fermée.

9. Système de suralimentation selon l'une des revendications 1 à 7, **caractérisé**
**en ce que** l'unité de contrôle de débit (11) de la soupape (9) est configurée pour déplacer l'élément de soupape mobile (10) entre une position complètement ouverte et une position complètement fermée et vers des positions entre la position complètement ouverte et la position complètement fermée.

10. Procédé d'exploitation d'un agencement de wastegate (7) dans un moteur à combustion interne à pistons (1) comportant un système de suralimentation comprenant une unité de turbocompresseur (2) comprenant une partie compresseur (3) et une partie turbine (4) mécaniquement reliées entre elles, un système de gaz d'échappement (5) reliant la partie turbine (4) de l'unité de turbocompresseur (2) au moteur (1), un système d'air d'admission (6) reliant la partie compresseur (3) de l'unité de turbocompresseur (2) au moteur (1), ledit agencement de wastegate (7) comportant une extrémité amont (8) en communication fluidique avec le système d'air d'admission (6) en aval de la partie compresseur (3) de l'unité de turbocompresseur (2) et comportant une soupape (9) configurée pour réguler le débit de gaz dans l'agencement de wastegate (7), ladite soupape (9) comprenant un élément de soupape mobile (10) configuré pour limiter un débit de gaz à travers la soupape (9) et une unité de contrôle de débit (11) configurée pour déplacer l'élément de soupape mobile, ledit procédé comprenant les étapes consistant à :
fournir un actionneur à réponse thermique (12),
relier mécaniquement l'unité de contrôle de débit (11) de la soupape (9) de l'agencement de wastegate (7) à un actionneur à réponse thermique (12),
actionner l'unité de contrôle de débit (11) de la soupape (9) en réponse à des températures détectées par l'actionneur à réponse thermique (12),
**caractérisé par** les étapes consistant à
fournir le système de suralimentation sur un moteur à combustion interne à pistons (1) disposé dans un boîtier (15) de telle façon qu'une extrémité amont (16) du système d'air d'admission (6) soit en communication fluidique avec l'air ambiant environnant le boîtier (15), et
disposer une extrémité (17) de l'actionneur à réponse thermique (12) exposée à l'air ambiant environnant le boîtier (15).

11. Procédé selon la revendication 10, **caractérisé par** l'étape consistant à
disposer une extrémité (17) de l'actionneur à réponse thermique (12) exposée à un gaz coulant dans le système d'air d'admission (6) en amont de la partie compresseur (3) de l'unité de turbocompresseur (2).

12. Procédé selon la revendication 10 ou 11, **caractérisé par** l'étape consistant à
isoler thermiquement l'actionneur à réponse thermique (12), à l'exception de ladite extrémité (17).

13. Procédé selon l'une des revendications 10 à 12, **caractérisé par** les étapes consistant à
relier une extrémité aval (18) de l'agencement de wastegate (7) en communication fluidique avec le système d'air d'admission (6) en amont de la partie compresseur (3) de l'unité de turbocompresseur (2), et
introduire de l'air venant de l'agencement de wastegate (7) dans le système d'air d'admission (6) en amont de la partie compresseur (3) de l'unité de turbocompresseur (2).

14. Procédé selon l'une des revendications 10 à 13, **caractérisé par** l'étape consistant à
évacuer de l'air venant de l'agencement de wastegate (7) vers l'extérieur du système d'air d'admission (6).

15. Procédé selon l'une des revendications 10 à 14, **caractérisé par** l'étape consistant à
déplacer l'élément de soupape mobile (10) avec l'unité de contrôle de débit (11) de la soupape (9) sélectivement vers une position complètement ouverte ou vers une position complètement fermée en réponse aux températures détectées par l'actionneur à réponse thermique (12).

16. Procédé selon l'une des revendications 10 à 14, **caractérisé par** l'étape consistant à
déplacer l'élément de soupape mobile (10) avec l'unité de contrôle de débit (11) de la soupape (10) entre une position complètement ouverte et une position complètement fermée et vers des positions entre la position complètement ouverte et la position complètement fermée en réponse aux températures détectées par l'actionneur à réponse thermique (12).
